(19) Europäisches Patentamt
European Patent Office
Office européen des brevets

(11) **EP 4 588 689 A1**

(12) **EUROPEAN PATENT APPLICATION**

(43) Date of publication:
23.07.2025 Bulletin 2025/30

(21) Application number: 25151929.4

(22) Date of filing: 15.01.2025

(51) International Patent Classification (IPC):
$B60C\ 1/00^{(2006.01)}$  $B60C\ 11/00^{(2006.01)}$
$B60C\ 11/03^{(2006.01)}$  $B60C\ 11/13^{(2006.01)}$
$B60C\ 13/00^{(2006.01)}$  $C08K\ 3/04^{(2006.01)}$
$C08L\ 9/06^{(2006.01)}$

(52) Cooperative Patent Classification (CPC):
(C-Sets available)
B60C 1/0016; B60C 1/0025; B60C 11/005;
B60C 11/033; B60C 11/13; B60C 11/1315;
B60C 11/1323; B60C 13/00; C08C 19/02;
C08K 3/04; B60C 2011/0025; B60C 2011/0346;
B60C 2011/0353; B60C 2011/0355; B60C 2011/133;
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.01.2024 JP 2024007405

(71) Applicant: SUMITOMO RUBBER INDUSTRIES,
LTD.
Kobe-shi, Hyogo 651-0072 (JP)

(72) Inventor: HASEGAWA, Shunya
Kobe-shi, 651-0072 (JP)

(74) Representative: TBK
Bavariaring 4-6
80336 München (DE)

(54) **TIRE**

(57) A tire comprising a tread part (1) and a sidewall part (32),
wherein the tread part and the sidewall part are each composed of a rubber composition comprising a rubber component comprising a hydrogenated styrene-butadiene rubber, and
wherein L is 0.60 or more and 0.90 or less, and
$(St1 + St2) \times T \times L / 100$ is 1.4 or less,
where St1 represents a total styrene amount, in % by mass, of a rubber component constituting the tread part, St2 represents a total styrene amount, in % by mass, of a rubber component constituting the sidewall part, L represents a land ratio, and T represents a thickness, in mm, of a rubber layer constituting the sidewall part.

FIG. 1

**(Cont. next page)**

(52) Cooperative Patent Classification (CPC): (Cont.)
B60C 2013/006; B60C 2013/007

C-Sets
**C08F 236/10, C08F 4/48;**
**C08L 9/06, C08L 9/00, C08L 91/00, C08L 45/00,**
**C08L 7/00, C08K 3/04, C08K 3/36, C08K 5/548,**
**C08K 5/09, C08K 3/06, C08K 5/47, C08K 5/31;**
**C08L 15/00, C08L 9/00, C08L 91/00, C08L 45/00,**
**C08K 3/04, C08K 3/36, C08K 5/548, C08K 5/09,**
**C08K 3/06, C08K 5/47, C08K 5/31;**
**C08L 15/00, C08L 9/00, C08L 91/00, C08L 45/00,**
**C08L 7/00, C08K 3/04, C08K 3/36, C08K 5/548,**
**C08K 5/09, C08K 3/06, C08K 5/47, C08K 5/31;**
**C08L 15/00, C08L 9/06, C08L 91/00, C08L 45/00,**
**C08K 3/04, C08K 3/36, C08K 5/548, C08K 5/09,**
**C08K 3/06, C08K 5/47, C08K 5/31**

**Description**

TECHNICAL FIELD

The present invention relates to a tire.

BACKGROUND OF THE INVENTION

A hardening effect in a tread part of a tire due to a change over time is a factor causing deterioration of various kinds of performance of a tire. For example, JP 2005-67236 A describes that, in a pneumatic tire having a tread part comprising a cap rubber layer, an intermediate rubber layer, and a base rubber layer, a thickness of each rubber layer relative to the entire thickness of the tread part and an acetone extraction amount of each rubber layer are made to fall within predetermined ranges, thereby effectively suppressing the hardening effect over time of the tread part.

Recently, there has been increasing demands for achievement of fuel efficiency of an automobile. In order to address achievement of fuel efficiency of an automobile, a tire has also been required to have fuel efficiency due to a reduction in rolling resistance. Furthermore, an improvement in overall performance of fuel efficiency and other performances of a tire has also been demanded.

SUMMARY OF THE INVENTION

It is an object of the present invention to provide a tire with an improved overall performance of durability and fuel efficiency after deterioration of the tire.

The present invention relates to the following tire.

A tire comprising a tread part and a sidewall part,

wherein the tread part and the sidewall part are each composed of a rubber composition comprising a rubber component comprising a hydrogenated styrene-butadiene rubber, and
wherein L is 0.60 or more and 0.90 or less, and
$(St1+St2) \times T \times L / 100$ is 1.4 or less,
where St1 represents a total styrene amount, in % by mass, of a rubber component constituting the tread part, St2 represents a total styrene amount, in % by mass, of a rubber component constituting the sidewall part, L represents a land ratio, and T represents a thickness, in mm, of a rubber layer constituting the sidewall part.

According to the present invention, provided is a tire with an improved overall performance of durability and fuel efficiency after deterioration of the tire.

BRIEF DESCRIPTION OF THE DRAWINGS

FIG. 1 is a cross-sectional view of one example of a tire relating to one embodiment of the present invention.
FIG. 2 is a cross-sectional view of a tread part of a tire relating to one embodiment of the present invention, which passes through a tire rotation axis.
FIG. 3 is an enlarged plane view of a circumferential groove relating to one embodiment of the present invention.
FIG. 4 is a cross-sectional view along an A-A line of FIG. 3.
FIG. 5 is an enlarged plane view of a circumferential groove relating to one embodiment of the present invention.
FIG. 6 is a cross-sectional view along a B-B line of FIG. 5.
FIG. 7 is a cross-sectional view along a C-C line of FIG. 5.

DETAILED DESCRIPTION

The tire that is one embodiment of the present invention is a tire comprising a tread part and a sidewall part, wherein the tread part and the sidewall part are each composed of a rubber composition comprising a rubber component comprising a hydrogenated styrene-butadiene rubber, and wherein L is 0.60 or more and 0.90 or less, and $(St1+St2) \times T \times L / 100$ is 1.4 or less,
where St1 represents a total styrene amount, in % by mass, of a rubber component constituting the tread part, St2 represents a total styrene amount, in % by mass, of a rubber component constituting the sidewall part, L represents a land ratio, and T represents a thickness, in mm, of a rubber layer constituting the sidewall part.

Although it is not intended to be bound by a theory, for example, the following can be considered as a mechanism by which an overall performance of durability and fuel efficiency after deterioration is improved in the tire of the present invention.

First, when a hydrogenated styrene-butadiene rubber is compounded in a rubber composition, (1) due to the fact that the hydrogenated styrene-butadiene rubber has fewer double bonds, the number of starting points of deterioration is decreased and thus ozone deterioration and age hardening are less likely to progress. Moreover, (2) since the hydrogenated styrene-butadiene rubber has many methylene units, rigidity of each rubber composition is increased.

Additionally, when both the tread part and the sidewall part comprise a hydrogenated styrene-butadiene rubber, (3) a difference in rigidity between the rubber composition constituting the tread part and the rubber composition constituting the sidewall part is decreased, so that strain becomes less likely to occur at the interface between the tread part and the sidewall part and heat generation of the tire can be lowered. Moreover, (4) a difference in progress of age hardening is decreased, so that a difference in rigidity between the tread part and the sidewall part becomes small even after deterioration of the tire.

Moreover, when the land ratio L is 0.60 or more and 0.90 or less, (5) deformation of the tread part is suppressed, and heat generation can be kept at or below a certain level.

Additionally, when $(St1+St2) \times T \times L / 100$ is 1.4 or less, (6) heat generation caused by movements of polymers in each of the rubber compositions constituting the tread part and the sidewall part can be lowered, and heat accumulation in each rubber composition can be suppressed.

Then, it is considered that, with cooperation of (1) to (6), a remarkable effect of improving the overall performance of durability and fuel efficiency after deterioration is achieved.

The rubber composition constituting the sidewall part preferably comprises a recovered carbon black.

Due to an influence of carbide or the like of hydrocarbon contained in a raw material, e.g., a rubber product or the like, the recovered carbon black includes more crystal components (ashes) than a usual carbon black, and thus it is considered that a surface activity of the recovered carbon black is lowered. Therefore, when the rubber composition constituting the sidewall part comprises a recovered carbon black, minute friction becomes less likely to occur between the surface of the recovered carbon black and rubber molecular chains, heat generation of the sidewall part can be lowered, and thus it is considered that fuel efficiency is further improved.

St1+St2 is preferably 25.0 or more.

When styrene domains are increased in the rubber compositions constituting the tread part and the sidewall part, rigidity of each part becomes high, and thus it is considered that durability after deterioration is further improved.

When an acetone extraction amount, in % by mass, of the rubber composition constituting the tread part is referred to as AE1 and an acetone extraction amount, in % by mass, of the rubber composition constituting the sidewall part is referred to as AE2, AE1-AE2 is preferably 8.5 or less.

When a difference in acetone extraction amount between the tread part and the sidewall part is decreased, a difference in progress of age hardening becomes small, so that a difference in rigidity between the tread part and the sidewall part becomes small even after deterioration, and thus it is considered that durability after deterioration is further improved.

When the acetone extraction amount, in % by mass, of the rubber composition constituting the tread part is referred to as AE1, $AE1 \times L$ is preferably 15.00 or more.

Even in a case where the land ratio is low, shock-absorbing capability of the tread part can be secured by increasing the acetone extraction amount of the rubber composition constituting the tread part, and thus it is considered that ride comfort is further improved.

When the acetone extraction amount, in % by mass, of the rubber composition constituting the sidewall part is referred to as AE2, AE2/T is preferably 0.12 or more.

When a thickness of a rubber layer of the sidewall part is thinned, heat generation of the sidewall part can be lowered, and thus fuel efficiency is further improved. Even in such a case, it is considered that ride comfort is improved by increasing the acetone extraction amount of the rubber composition constituting the sidewall part.

When a Shore hardness of the rubber composition constituting the tread part is referred to as Hs1 and a Shore hardness of the rubber composition constituting the sidewall part is referred to as Hs2, Hs1-Hs2 is preferably 10.0 or less.

When a difference in hardness between the rubber composition constituting the tread part and the rubber composition constituting the sidewall is decreased, strain becomes less likely to occur on the member interface, heat generation of the tire can be lowered, and thus it is considered that durability can be further improved.

When a complex elastic modulus at 30°C, in MPa, of the rubber composition constituting the sidewall part is referred to as 30°CE*s, T/30°CE*s is preferably 1.60 or less.

When a thickness of a rubber layer of the sidewall part is thinned, heat generation of the sidewall part can be lowered, and thus fuel efficiency is further improved. In such a case, it is considered that, by increasing 30°CE*s, rigidity of the rubber composition can be secured, and durability can be further improved.

It is preferable that the tread part comprises one or more circumferential grooves extending continuously in a tire circumferential direction, and, when a groove depth, in mm, of a deepest part of the one or more circumferential grooves is referred to as H and a tan $\delta$ at 30°C of the rubber composition constituting the tread part is referred to as 30°C tan $\delta_T$, 30°C tan $\delta_T$ / H is 0.025 or more.

When 30°C tan $\delta_T$ is decreased, heat generation of the tread part is lowered, and thus it is considered that fuel efficiency can be further improved. Even in such a case, it is considered that, by increasing the groove depth H of the circumferential grooves, wet performance after abrasion of the tread part can be secured, which further improves fuel efficiency and wet performance after deterioration.

An aspect ratio of the tire that is one embodiment of the present invention is preferably 50% or more from the viewpoint of ride comfort.

It is preferable that the tread part comprises one or more circumferential grooves extending continuously in a tire circumferential direction, a groove wall of at least one circumferential groove has a recessed part that is recessed outward in a groove width direction from a groove edge appearing on a grounding surface of the tread part, and a total recessed amount of the at least one circumferential groove is 0.10 to 0.90 times as large as that of the groove width of the at least one circumferential groove.

When an opening area of a circumferential groove is increased as the tread part abrades, steering stability on a wet road surface is maintained for a long period of time, and thus it is considered that durability after deterioration is further improved.

It is preferable that a first groove wall that is one of groove walls of the circumferential groove has a first recessed part that is recessed outward in a groove width direction from a groove edge appearing on a grounding surface of the tread part, and a recessed amount of the first recessed part from the groove edge is gradually decreased toward both sides of the tire circumferential direction from a deepest part that is recessed most outward in the groove width direction.

It is preferable that the first groove wall further has a second recessed part that is recessed outward in a groove width direction from a groove edge appearing on a grounding surface of the tread part where the recessed amount from the groove edge is constant in the tire circumferential direction.

When the structure as described above is used, it is considered that durability and fuel efficiency after deterioration are further improved.

The rubber composition constituting the tread part preferably comprises 80 parts by mass or more of silica based on 100 parts by mass of a rubber component.

When it comprises 80 parts by mass or more of silica, rolling resistance is reduced, and thus it is considered that fuel efficiency can be further improved.

[Definition]

A "tread part" is a member including a part forming a ground-contacting surface of a tire and is a member arranged on an outer side in a tire radial direction with respect to members forming a tire skeleton with steel or a textile material, such as a belt layer, a belt reinforcement layer, a carcass layer, and the like, on a cross section in the tire radial direction, when the tire comprises these members.

A "thickness T, in mm, of a rubber layer constituting a sidewall part" is a thickness, in a direction parallel to a tire width direction, of a rubber layer forming the sidewall part at a position at which a distance between both-side sidewalls becomes longest on a cross section of a tire along a plane including a tire rotation axis.

A "rubber component of a rubber composition" refers to a component contributing to crosslinking in the rubber composition and is generally a component having a weight-average molecular weight (Mw) of 10000 or more.

A "total styrene amount St in a rubber composition" is a total content, in % by mass, of the styrene parts compounded in 100% by mass of the rubber component and is a value obtained by: calculating a value obtained by multiplying a styrene content, in % by mass, by a mass fraction in the rubber component for each rubber component; and summing up these values. Specifically, it is calculated by $\Sigma$ (styrene content (% by mass) of each styrene-containing rubber $\times$ content (% by mass) of each styrene-containing rubber in rubber component 1100). For example, when the rubber component consists of 30% by mass of a first SBR (styrene content: 25% by mass), 60% by mass of a second SBR (styrene content: 27.5% by mass), and 10% by mass of a BR, the total styrene amount (St) in 100% by mass of the rubber component is 24.0% by mass (= (25×30/100)+(27.5×60/100)+(0×10/100)).

A "standardized state" is a state in which the tire is rim-assembled to a standardized rim, filled with air at a standardized internal pressure, and applied with no load.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" refers to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity $W_L$" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load.

$$W_L = 0.000011 \times V + 175$$

$$V = [(Dt/2)^2 - (Dt/2 - Ht)^2] \times \pi \times Wt$$

A "ground-contacting region" is a region of a tread obtained from a contour when a tire is pressed against a ground. The ground-contacting region is obtained by assembling the tire to a standardized rim, filling the tire with air at a standardized internal pressure, and leaving the tire to stand at 25°C for 24 hours, followed by applying ink to a tire tread surface, applying a standardized load (load equal to a maximum load capacity) on the tire to perpendicularly press the tire tread surface on cardboard (a camber angle is 0°), and performing transcription of the ink. An area of the ground-contacting region is referred to as "total ground-contacting area". The total ground-contacting area can be calculated as an average value of areas of five sites obtained by rotating the tire in 72 degree increments to perform the above-described transcription operation at the five sites in total.

An "effective ground-contacting region" is a region of a tread with which a tire touches the ground when the tire is pressed against the ground. The effective ground-contacting region is obtained by assembling the tire to a standardized rim, filling the tire with air at a standardized internal pressure, and leaving the tire to stand at 25°C for 24 hours, followed by applying ink to a tire tread surface, applying a standardized load (load equal to a maximum load capacity) on the tire to perpendicularly press the tire tread surface on cardboard (a camber angle is 0°), and performing transcription of the ink. An area of the effective ground-contacting region is referred to as "effective ground-contacting area". The effective ground-contacting area can be calculated as an average value of areas of five sites obtained by rotating the tire in 72 degree increments to perform the above-described transcription operation at the five sites in total.

A "land ratio L" is calculated, from the total ground-contacting area of the ground-contacting region and the effective ground-contacting area of the effective ground-contacting region, by the following equation, Land ratio = (effective ground-contacting area / total ground-contacting area).

An "acetone extraction amount (AE)" is a value calculated by the following equation by immersing each vulcanized rubber test piece in acetone at normal temperature (around 25°C) for 72 hours in accordance with JIS K 6229 to extract a soluble component and measuring a mass of each test piece before and after the extraction, (Acetone extraction amount (% by mass)) = {(mass of rubber test piece before extraction - mass of rubber test piece after extraction)/(mass of rubber test piece before extraction)} × 100.

A "Shore hardness of a rubber composition" is a Shore hardness that is measured under a condition of a temperature at 23°C using a type A durometer in accordance with JIS K 6253-3:2012. In a case where a sample for measurement is prepared from a tread part of a tire, a tread rubber is cut out of a surface-side part forming a ground-contacting surface of the tire so that a tire radial direction becomes a thickness direction, and measurement is performed while pressing the type A durometer against the ground-contacting surface side of the sample.

"A loss tangent (tan $\delta$) and a complex elastic modulus $E_*$ of a rubber composition" are a tan $\delta$ and a complex elastic modulus $E_*$, in MPa, that are measured with an extension mode, using a dynamic viscoelasticity measuring device (for example, EPLEXOR series manufactured by gabo Systemtechnik GmbH), under each condition. A sample used for dynamic viscoelasticity measurement is a vulcanized rubber composition having a length of 20 mm, a width of 4 mm, and a thickness of 1 mm. When a sample is prepared by being cut out from a tire, in a case where a member from which the sample is prepared is a tread, a belt reinforcement layer, a belt layer, or an inner liner, the direction of the length of the sample is made to match a tire circumferential direction, and the direction of the thickness of the sample is made to match a tire radial direction. In a case where a member from which the sample is prepared is a sidewall part, a clinch, a bead apex, or a side reinforcement layer, the direction of the length of the sample is made to match a tangential direction relative to the circumference of the tire, and the direction of the thickness of the sample is made to match a tire width direction. Besides, in every case, the sample is prepared so that a size of the sample approximates a predetermined size as much as possible. This is because it is considered that there is no influence of the size of the sample since distortion applied to the sample is standardized with respect to its length and both of a tan $\delta$ and $E_*$ to be measured are standardized by a width and a thickness of the sample.

"30°C tan $\delta$" and "30°C $E_*$" are a loss tangent (tan $\delta$) and a complex elastic modulus $E_*$, in MPa, respectively, that are measured under a condition of a temperature at 30°C, a frequency of 10 Hz, an initial strain of 5%, a dynamic strain of $\pm 1\%$, and an extension mode.

A "groove" refers to a recessed part that is formed on a tread surface of a tire (and that extends toward the inner side in the tire radial direction), where the recessed part has an opening width of 2.0 mm or more on a tread surface. A recessed part having an opening width less than 2.0 mm or more on a tread surface is referred to as a "sipe".

A "circumferential groove" refers to a groove extending continuously in a tire circumferential direction. The circumferential groove may extend linearly along the circumferential direction or may extend in a wavy, sinusoidal, or zigzag shape along the circumferential direction.

A "groove depth H, in mm, of a deepest part of a circumferential groove" refers to a linear distance between a straight line connecting ends of the circumferential grooves on a tread surface and a lowest part of the groove in the tire radial direction on a cross section of a tire taken along a plane including a tire rotation axis. In a case where the groove depth of the circumferential groove varies in the tire width direction and/or in the circumferential direction, the groove depth of the circumferential groove shall be the maximum value of the straight line.

An "aspect ratio (%) of a tire" is calculated, from a tire cross-sectional height Ht, in mm, and a tire cross-sectional width Wt, in mm, by (Ht/Wt)$\times$100 in a case where the tire is filled with air at a standardized internal pressure.

A "styrene content" is a value calculated by $^1$H-NMR measurement and is applied to a rubber component having a repeating unit derived from styrene such as, for example, an SBR and the like (styrene unit-containing rubber).

A "vinyl content (1,2-bond butadiene unit amount)" is a value calculated in accordance with JIS K 6239-2:2017 by an infrared absorption spectrometry and is applied to a rubber component having a repeating unit derived from butadiene such as, for example, an SBR, a BR, and the like.

A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, Mw is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by a BET method according to ASTM D3037-93.

An "average primary particle size" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "4$\times$(area of particle)/-$\pi$") calculated from a microscope image is defined as a particle size.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only. Besides, in the present specification, a numerical range identified with "to" means to include the numerical values of both ends.

[Tire]

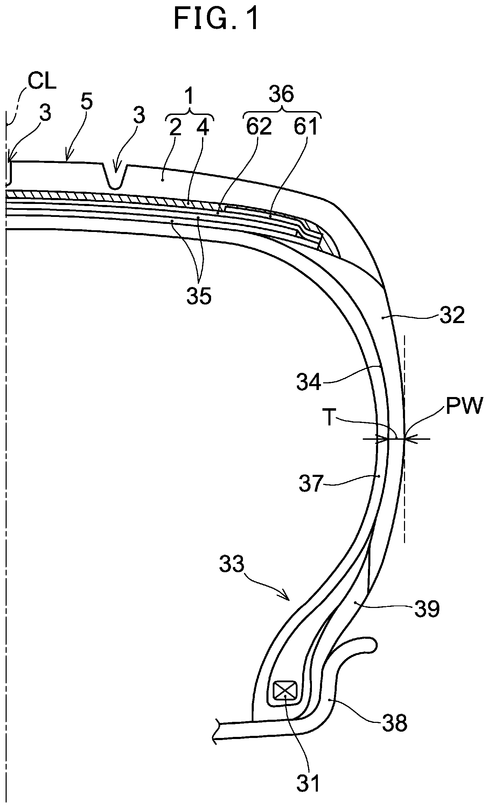

Fig. 1 is a cross-sectional view of a tire relating to the present embodiment on a plane including a tire rotation axis of the tire, but the present invention is not limited to such an aspect. The tire of FIG. 1 comprises a tread part 1, a sidewall part 32, a bead part 33, a carcass 34, a belt layer 35, a belt reinforcement layer 36, an inner liner 37, and a clinch 39. The bead part 33 comprises a bead core 31. The belt layer 35 is laminated in two layers, and the belt reinforcement layer 36 with a jointless structure is arranged between a base rubber layer 4 and the belt layer 35. The belt reinforcement layer 36 consists of: an edge band 61 covering only an edge part of the belt layer 35; and a full band 62 covering the entirety of the belt layer 35.

The tread part of the tire relating to the present embodiment comprises at least one rubber layer. The tread part relating to the present embodiment may be composed of a single rubber layer or may comprise two or more rubber layers, and preferably comprises two or more rubber layers. Although a configuration of the rubber layer is not particularly limited, the tread part comprises: the base rubber layer 4 adjacent to the outer side of the belt reinforcement layer 36 (or the belt layer 35 in a case where no belt reinforcement layer is present) in a tire radial direction; and a cap rubber layer 2 constituting a tread surface 5 in FIG. 1. Moreover, one or more intermediate rubber layers may be further provided between the cap rubber layer 2 and the base rubber layer 4.

In FIG. 1, a "thickness T, in mm, of a rubber layer constituting a sidewall part" is a distance from a surface of the sidewall part to a surface of the carcass 34, which is measured along a normal line at a position PW at which the distance between both-side sidewalls becomes longest.

The thickness T of the rubber layer constituting the sidewall part is preferably 2.0 mm or more, more preferably 2.5 mm or more, further preferably 3.0 mm or more, particularly preferably 3.5 mm or more. Moreover, the thickness T of the rubber layer constituting the sidewall part is preferably 6.0 mm or less, more preferably 5.5 mm or less, further preferably 5.0 mm or less, particularly preferably 4.5 mm or less, from the viewpoint of the effects of the present invention.

A land ratio L of the tire relating to the present embodiment is 0.60 or more, preferably 0.65 or more, more preferably 0.68 or more, further preferably 0.70 or more, from the viewpoint of the effects of the present invention. Moreover, the land ratio L is 0.90 or less, preferably 0.88 or less, more preferably 0.85 or less, from the viewpoint of grip performance.

A total styrene amount St1 of the rubber composition constituting the tread part is preferably greater than 15.0% by mass, more preferably greater than 17.9% by mass, further preferably greater than 20.0% by mass, particularly preferably greater than 22.0% by mass, from the viewpoint of the effects of the present invention. Moreover, it is preferably less than 30.0% by mass, more preferably less than 28.0% by mass, further preferably less than 25.0% by mass, from the viewpoint of low heat generation.

A total styrene amount St2 of the rubber composition constituting the sidewall part is preferably greater than 8.0% by mass, more preferably greater than 8.9% by mass, further preferably greater than 10.0% by mass, particularly preferably greater than 15.0% by mass, from the viewpoint of the effects of the present invention. Moreover, it is preferably less than 25.0% by mass, more preferably less than 20.0% by mass, further preferably less than 19.0% by mass, from the viewpoint of low heat generation.

St1+St2 is preferably 55.0 or less, more preferably 52.0 or less, further preferably 50.0 or less, further preferably less than 48.0 or less, particularly preferably 45.0 or less, from the viewpoint of the effects of the present invention. Moreover, it is preferably 20.0 or more, more preferably 25.0 or more, further preferably 28.0 or more, particularly preferably 30.0 or more, from the viewpoint of the effects of the present invention.

$(St1+St2) \times T \times L / 100$ is 1.4 or less, preferably 1.3 or less, more preferably 1.2 or less, from the viewpoint of the effects of the present invention. Moreover, $(St1+St2) \times T \times L / 100$ is preferably 0.9 or more, more preferably 1.0 or more, further preferably 1.1 or more.

Besides, a total styrene amount can be appropriately adjusted depending on types or compounding amounts of rubber components described below. For example, when a styrene-butadiene rubber with a high styrene content is compounded, the total styrene amount can be increased.

An acetone extraction amount AE1 of the rubber composition constituting the tread part is preferably 15.0% by mass or more, more preferably 16.0% by mass or more, further preferably 17.0% by mass or more, from the viewpoint of the effects of the present invention. Moreover, AE1 is preferably 20.0% by mass or less, more preferably 18.5% by mass or less, further preferably 18.0% by mass or less.

An acetone extraction amount AE2 of the rubber composition constituting the sidewall part is preferably 6.0% by mass or more, more preferably 7.0% by mass or more, further preferably 8.0% by mass or more, from the viewpoint of the effects of the present invention. Moreover, AE2 is preferably 13.0% by mass or less, more preferably 12.0% by mass or less, further preferably 9.0% by mass or less.

AE1-AE2 is preferably 10.0 or less, more preferably 9.0 or less, further preferably 8.5 or less, from the viewpoint of decreasing a difference in acetone extraction amount to decrease a difference in progress of age hardening. Moreover, AE1-AE2 is preferably 4.0 or more, more preferably 5.0 or more, further preferably 6.0 or more, from the viewpoint of processability.

Besides, an acetone extraction amount can be appropriately adjusted depending on types or compounding amounts of rubber components, fillers, plasticizing agents, and the like which are described below. For example, when a content of a plasticizing agent in a rubber composition is increased, the acetone extraction amount can be increased.

$AE1 \times L$ is preferably 10.00 or more, more preferably 12.00 or more, further preferably 14.00 or more, particularly preferably 15.00 or more, from the viewpoint of ride comfort. Moreover, $AE1 \times L$ is preferably 20.00 or less, more preferably 18.00 or less, further preferably 17.00 or less.

AE2/T is preferably 0.12 or more, more preferably 0.15 or more, further preferably 0.20 or more. Moreover, AE2/T is preferably 4.50 or less, more preferably 4.0 or less, further preferably 3.50 or less.

A Shore hardness Hs1 of the rubber composition constituting the tread part is preferably 60.0 or more, more preferably 65.0 or more, further preferably 66.5 or more. Moreover, Hs1 is preferably 72.0 or less, more preferably 70.0 or less, further preferably 69.0 or less.

A Shore hardness Hs2 of the rubber composition constituting the sidewall part is preferably 50.0 or more, more preferably 52.0 or more, further preferably 53.0 or more. Moreover, Hs2 is preferably 65.0 or less, more preferably 62.0 or less, further preferably 60.0 or less.

Hs1-Hs2 is preferably 15.0 or less, more preferably 13.0 or less, further preferably 10.0 or less, from the viewpoint that strain is less likely to occur on a member interface to lower heat generation of the tire, improving durability. Moreover, Hs1-Hs2 is preferably 4.0 or more, more preferably 5.0 or more, further preferably 6.0 or more, from the viewpoints of crack resistance of the sidewall part and steering stability of the tire.

Besides, a Shore hardness can be appropriately adjusted depending on types or compounding amounts of rubber components, fillers, plasticizing agents, and the like which are described below. For example, when a compounding amount of a plasticizing agent is increased, the Shore hardness of the rubber composition can be decreased, and conversely, when a compounding amount of a plasticizing agent is decreased, the Shore hardness can be increased.

A complex elastic modulus at 30°C of the rubber composition constituting the sidewall part (30°CE*s) is preferably 1.9 MPa or more, more preferably 2.0 MPa or more, further preferably 2.2 MPa or more, particularly preferably 2.4 MPa or more. Moreover, 30°CE*s is preferably 3.0 MPa or less, more preferably 2.8 MPa or less, further preferably 2.6 MPa or less.

A ratio of T to 30°CE*s (T/30°CE*s) is preferably 1.90 or less, more preferably 1.80 or less, further preferably 1.60 or less, from the viewpoint of the effects of the present invention. Moreover, T/30°CE*s is preferably 1.00 or more, more preferably 1.20 or more, further preferably 1.30 or more.

A complex elastic modulus at 30°C of the rubber composition constituting the tread part is, but not particularly limited to, preferably 3.0 MPa or more, more preferably 3.2 MPa or more, further preferably 3.5 MPa or more, particularly preferably 3.9 MPa or more. Moreover, the complex elastic modulus at 30°C of the rubber composition constituting the tread part is preferably 6.0 MPa or less, more preferably 5.0 MPa or less, further preferably 4.8 MPa or less.

A tan $\delta$ at 30°C of the rubber composition constituting the tread part (30°C tan $\delta_T$) is preferably 0.35 or less, more preferably 0.30 or less, further preferably 0.28 or less, from the viewpoint of the effects of the present invention. Moreover, 30°C tan $\delta_T$ is preferably 0.20 or more, more preferably 0.22 or more, further preferably 0.23 or more.

A ratio of 30°C tan $\delta_T$ to a groove depth H, in mm, of a deepest part of a circumferential groove described below (30°C tan $\delta_T$/H) is preferably 0.025 or more, more preferably 0.030 or more, further preferably 0.035 or more, from the viewpoint of the effects of the present invention. Moreover, 30°C tan $\delta_T$/H is preferably 0.050 or less, more preferably 0.045 or less, further preferably 0.040 or less.

A tan $\delta$ at 30°C of the rubber composition constituting the sidewall part is, but not particularly limited to, preferably 0.30 or less, more preferably 0.20 or less, further preferably 0.18 or less. Moreover, the tan $\delta$ at 30°C of the rubber composition constituting the sidewall part is preferably 0.10 or more, more preferably 0.12 or more, further preferably 0.15 or more.

Besides, 30°CE* and 30°C tan $\delta$ can be appropriately adjusted depending on types or compounding amounts of rubber components, fillers, plasticizing agents, and the like which are described below. For example, when a content of a filler in a rubber composition is increased, a content of a plasticizing agent is decreased, and the like, 30°CE* can be increased.

An aspect ratio of the tire relating to the present embodiment is preferably 50% or more, more preferably 55% or more, further preferably 60% or more, from the viewpoint of ride comfort. Moreover, the aspect ratio of the tire is usually 90% or less.

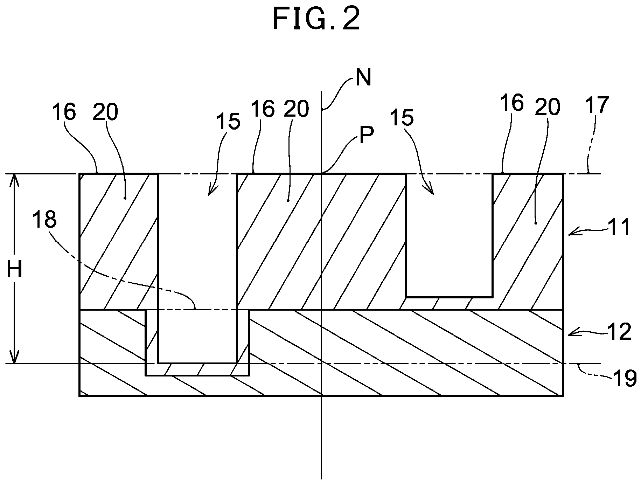

FIG. 2 is a cross-sectional view showing a cross section passing through a tire rotation axis of the tread part of the tire. In FIG, 2, a vertical direction is a tire radial direction, a horizontal direction is a tire width direction, and a direction perpendicular to a paper surface is a tire circumferential direction. A middle point in a tire width direction of a land part 20 is denoted by a symbol P in FIG. 2. A straight line denoted by the symbol N is a straight line (normal line) that passes through a point P and that is perpendicular to a tangent plane at the point P.

The tread part relating to the present embodiment preferably comprises at least one or more circumferential grooves 15.

In FIG. 2, a groove depth H of a deepest part of a circumferential groove 15 refers to a linear distance between a straight line 17 connecting ends of the circumferential grooves on a tread surface 16 and an extension line of a lowest part of the groove in the tire radial direction. Besides, in a case where a plurality of circumferential grooves 15 are provided, the groove depth H of the deepest part of the circumferential grooves 15 can be defined as a linear distance between the straight line 17 and an extension line 19 of a lowest part in the tire radial direction of a circumferential groove 15 having the deepest groove depth in the plurality of circumferential grooves 15.

The groove depth H of the deepest part of the circumferential direction is preferably 5.0 mm or more, more preferably 5.5 mm or more, further preferably 6.0 mm or more, particularly preferably 6.5 mm or more, from the viewpoint of abrasion resistance. Moreover, the groove depth H of the deepest part of the circumferential groove is preferably 12.0 mm or less, more preferably 10.0 mm or less, further preferably 9.0 mm or less, particularly preferably 8.5 mm or less, from the viewpoint of wet grip performance.

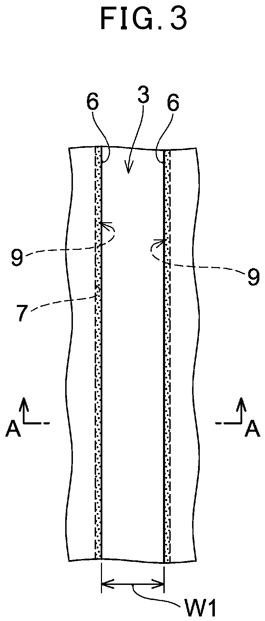

FIG. 3 shows an enlarged plane view of the circumferential groove 3 relating to one embodiment of the present invention. In FIG. 3, groove edges 6 of the circumferential groove 3 are indicated by solid lines, and a contour 7 of the groove wall in a case where the tread part is in a plane view is indicated by a broken line. Moreover, a recessed area (recessed part 9) between a groove edge 6 and the contour 7 of the groove wall of the circumferential groove 3 is represented by dots.

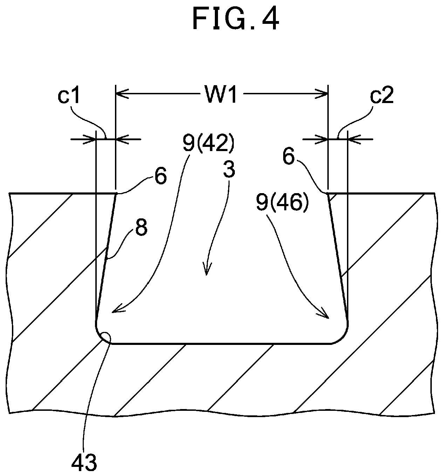

FIG. 4 shows an A-A line cross-sectional view of the circumferential groove 3 shown in FIG. 3. As shown in FIG. 4, the groove walls on both sides of the circumferential groove 3 are provided with recessed parts 9 whose recessed amount is constant in the tire circumferential direction. For example, in the recessed parts 9, a plane 8 is formed between a deepest part of the recessed part and a groove edge 6. However, the present invention is not limited to such an aspect.

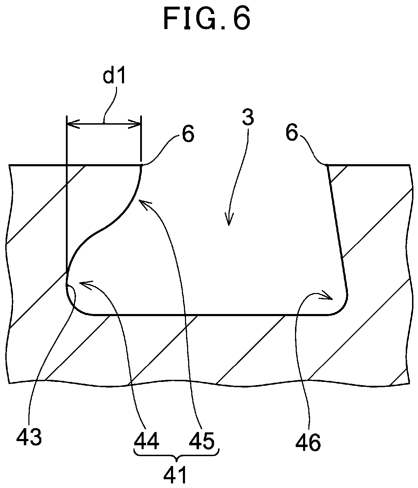

A total recessed amount in the circumferential groove 3 is preferably 0.10 to 0.90 times, more preferably 0.15 to 0.80 times, further preferably 0.20 to 0.70 times as large as the groove width W1 of the circumferential groove 3. Besides, in the present specification, the "total recessed amount in the circumferential groove" refers to $c_1 + c_2$ in a case where the circumferential groove 3 has the aspect of FIG. 4, or to $d_1 + d_2$ in a case where the circumferential groove 3 has the aspect of FIG. 6.

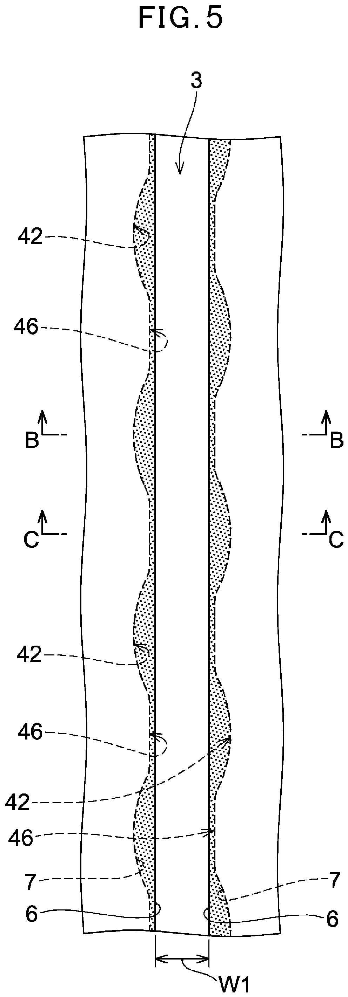

FIG. 5 shows an enlarged plane view of the circumferential groove 3 relating to one embodiment of the present invention. In FIG. 5, groove edges 6 of the circumferential groove 3 are indicated by solid lines, and a contour 7 of the groove wall in a case where the tread part is in a plane view is indicated by a broken line. Moreover, a recessed area between a groove edge 6 and the contour 7 of the groove wall of the circumferential groove 3 is represented by dots. A first recessed part 42 is recessed outward in a groove width direction from a groove edge 6 appearing on a grounding surface of the tread part. An opening area of the circumferential groove 3 increases as the tread part abrades, and therefore the first recessed part 42 exhibits an excellent wet performance even after deterioration, and thus it is considered that durability after deterioration is further improved.

A recessed amount of the first recessed part 42 from the groove edge 6 is gradually decreased toward both sides of the tire circumferential direction from the deepest part 43 that is recessed most outward in the groove width direction. As a result, rigidity of a land part partitioned off by the above-described circumferential groove 3 is secured on both sides of the deepest part 43 in the tire circumferential direction, and the groove edge side part of the land part can be suppressed from falling down to the groove center side of the circumferential groove 3. Moreover, the first recessed part 42 smoothly changes rigidity of the land part in the tire circumferential direction, and therefore a local deformation of the groove edge side part is suppressed. Accordingly, an excellent steering stability is obtained.

It is preferable that a curvature of the first recessed part 42 for an arc-shaped contour part 7 on the cross-section along the grounding surface of the tread part is gradually increased toward the inside in the tire radial direction.

FIG. 6 is a B-B line cross-sectional view of FIG. 5 and corresponds to a cross-sectional view of a groove passing though the deepest part 43 of the first recessed part 42 provided on a first groove wall 41. As shown in FIG. 6, the first recessed part 42 is preferably provided on the groove bottom side of the groove wall of the circumferential groove 3.

For example, the first recessed part 42 relating to the present embodiment preferably comprises a recessed surface part 44 that is recessed outward in the groove width direction, and a convex surface part 45 that connects with the outside of the recessed surface part 44 in the tire radial direction and that is convex on the groove center line side of the circumferential groove 3. Each of the recessed surface part 44 and the convex surface part 45 is preferably curved in a shape of a smooth arc.

It is preferable that a recessed amount of the first recessed part 42 is gradually decreased toward the outside in the tire radial direction from the deepest part 43 on the cross section of the groove passing through the deepest part 43. In order to secure a groove volume of the circumferential groove 3, a recessed amount d1 from the groove edge 6 in the deepest part 43 is preferably 0.10 times or more, more preferable 0.20 times or more, further preferable 0.30 times or more as large as the groove width W1, the groove width W1 being a length between the groove edges of the circumferential groove 3. Moreover, the recessed amount d1 is, but not particularly limited to, preferably 0.50 times or less as large as the groove width W1, from the viewpoint of easily removing, from the tread part, a rib of a vulcanization mold used for formation of circumferential grooves.

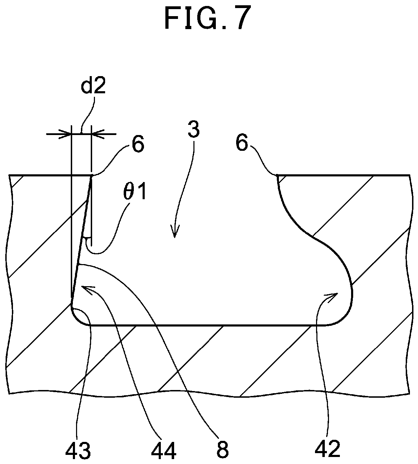

FIG. 7 is a C-C line cross-sectional view of FIG. 5 and corresponds to a cross-sectional view of a groove passing through a second recessed part 46 provided on the first groove wall 41. As shown in FIG. 7, in the second recessed part 46, for example, a plane 8 is formed between a deepest part 43 of the recessed part and a groove edge 6. However, the second recessed part 46 is not limited to such an aspect.

An angle $\theta 1$ of the plane 8 of the second recessed part 46 is, for example, preferably 5 to 15°. Besides, the angle $\theta 1$ is an angle between a normal line of the tread passing through the groove edge 6 and the plane 8. Such a second recessed part 46 can improve wet performance after abrasion of the tread part, and thus it is considered that durability after deterioration is further improved.

[Rubber composition]

Rubber compositions constituting a tread part and a sidewall part of the tire relating to the present embodiment (which are referred to as "rubber composition relating to the present embodiment" hereinafter) will be described.

The rubber composition relating to the present embodiment preferably comprises a diene-based rubber as a rubber component and comprises, as an essential component, a hydrogenated styrene-butadiene rubber (hydrogenated SBR) among diene-based rubbers. Moreover, the rubber composition relating to the present embodiment preferably comprises one or more rubbers selected from an isoprene-based rubber, a butadiene rubber (BR), and a styrene-butadiene rubber (SBR). The rubber composition relating to the present embodiment may also comprise only a diene-based rubber component as a rubber component.

<Rubber component>

As the diene-based rubber, any rubber components can be appropriately used which are commonly used in the tire industry. Specifically, examples of the diene-based rubber include, for example, an isoprene-based rubber, a BR, an SBR, a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination.

(Hydrogenated SBR)

A hydrogenated SBR can be synthesized by performing hydrogeneration treatment on a styrene-butadiene rubber.

A hydrogenation rate of the hydrogenated SBR is preferably 40 mol% or more, more preferably 50 mol% or more, further preferably 60 mol% or more, particularly preferably 70 mol% or more. Moreover, the hydrogenation rate of the hydrogenated SBR is preferably 99 mol% or less, more preferably 98 mol% or less. When the hydrogenation rate is within the above-described ranges, the effects of the present invention tend to be obtained more appropriately. The hydrogenation rate can be adjusted by adjusting a reaction condition such as hydrogen gas-supplying pressure, reaction temperature, and the like in a hydrogenation reaction described below in Production example 1. Bedsides, the hydrogenation rate refers to a ratio of hydrogenated double bonds to a conjugated diene moiety of a copolymer of an aromatic vinyl compound and a conjugated diene compound, and the hydrogenation rate can be calculated from a spectral reduction rate of an unsaturated bond part among spectra obtained by measuring $^1$H-NMR.

(SBR)

The SBR (which includes both of the hydrogenated SBR and a non-hydrogenated SBR hereinafter) is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include an SBR modified at its terminal and/or main chain; a modified SBR coupled with tin, a silicon compound, etc. (a modified SBR of condensate or having a branched structure, etc.); and the like. These SBRs may be used alone, or two or more thereof may be used in combination.

A styrene content of an SBR is preferably greater than 20% by mass, more preferably greater than 25% by mass, from the viewpoint of the effects of the present invention. On the other hand, the styrene content of the SBR is preferably less than 60% by mass, more preferably less than 50% by mass, further preferably less than 45% by mass. When the styrene content of the SBR is greater than 60% by mass, styrene groups become adjacent to each other, a polymer becomes too hard, crosslinking easily becomes non-uniform, and thus there is a risk that blow performance during running at a high temperature would deteriorate. Moreover, temperature dependency increases, a change in performance relative to a change in temperature becomes large, and thus a stable grip performance during running and at a later stage tends not to be obtained favorably. Besides, in the present specification, the styrene content of the SBR is measured by the above-described measuring method.

A vinyl content of an SBR is preferably greater than 10 mol%, more preferably greater than 15 mol%, further preferably greater than 20 mol%. Moreover, the vinyl content of the SBR is preferably less than 70 mol%, more preferably less than 65 mol%, further preferably less than 60 mol%. Besides, in the present specification, the vinyl content of the SBR is measured by the above-described measuring method.

A glass transition temperature (Tg) of an SBR is preferably -80°C or higher, more preferably -70°C or higher, further preferably -65°C or higher, from the viewpoint of wet grip performance. Moreover, the Tg of the SBR is preferably -40°C or lower, more preferably -45°C or lower, further preferably - 50°C or lower, particularly preferably -55°C or lower, from the viewpoint of fuel efficiency. Besides, in the present specification, the Tg of the SBR is calculated by removing an extending oil using acetone in accordance with JIS K 6229 and subjecting a pure SBR content to differential scanning calorimetry (DSC) in accordance with JIS K 7121.

A weight-average molecular weight (Mw) of an SBR is preferably greater than 200000, more preferably greater than 300000, further preferably greater than 400000, particularly preferably greater than 500000. Moreover, Mw is preferably less than 2000000, more preferably less than 1500000, further preferably less than 1000000, from the viewpoint of cross-linking uniformity. Besides, Mw of the SBR is measured by the above-described measuring method.

An oil-extended SBR or a non-oil extended SBR can be used as an SBR. In the present specification, those commercially available from JSR Corporation, Sumitomo Chemical Co., Ltd., UBE Corporation, Asahi Kasei Corporation, ZS Elastomer Co., Ltd., ARLANXEO, etc. can be used as the SBR.

A content of an SBR in the rubber component constituting the tread part is preferably 40% by mass or more, more preferably 50% by mass or more, further preferably 60% by mass or more. Moreover, the content of the SBR in the rubber component is preferably 90% by mass or less, more preferably 85% by mass or less.

A content of an SBR in the rubber component constituting the sidewall part is preferably 30% by mass or more, more preferably 40% by mass or more, further preferably 50% by mass or more, particularly preferably 60% by mass or more. Moreover, the content of the SBR in the rubber component is preferably 80% by mass or less, more preferably 70% by mass or less, further preferably 65% by mass or less.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component constituting the sidewall part is preferably 10% by mass or more, more preferably 15% by mass or more, further preferably 20% by mass or more, particularly preferably 25% by mass or more. Moreover, the content is preferably 80% by mass or less, more preferably 70% by mass or less, further preferably 60% by mass or less, particularly preferably 50% by mass or less.

A content of an isoprene-based rubber in the rubber component constituting the tread part can be, but not particularly limited to, for example, 1% by mass or more, 5% by mass or more, or 10% by mass or more. The rubber composition constituting the tread part may not comprise an isoprene-based rubber.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of a high cis BR is preferably greater than 95 mol%, more preferably greater than 96 mol%, further preferably greater than 97 mol%. Besides, a cis content of a BR is measured by the above-described measuring method.

The rare-earth-based BR is synthesized using a rare-earth element-based catalyst and has a vinyl content of preferably less than 1.8 mol%, more preferably less than 1.6 mol%, further preferably 1.5 mol% or less, and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 300000, more preferably greater than 350000, further preferably greater than 400000, from the viewpoint of abrasion resistance. Moreover, it is preferably less than 2000000, more preferably less than 1000000, further preferably less than 500000, from the viewpoints of cross-linking uniformity, etc. Besides, the Mw can be calculated by the above-described method.

A content of a BR in the rubber component constituting the tread part is preferably 10% by mass or more, more preferably 15% by mass or more, further preferably 20% by mass or more. Moreover, the content of the BR in the rubber component is preferably 60% by mass or less, more preferably 55% by mass or less, further preferably 50% by mass or less.

A content of a BR in the rubber component constituting the sidewall part is preferably 3% by mass or more, more preferably 5% by mass or more, further preferably 10% by mass or more. Moreover, the content of the BR in the rubber component is preferably 50% by mass or less, more preferably 40% by mass or less, further preferably 30% by mass or less.

(Other rubber components)

The rubber component may comprise a rubber component other than diene-based rubbers (non-diene-based rubbers) as long as it does not affect the effects of the present invention. As a non-diene-based rubber, a rubber component commonly used in the tire industry can be used, examples of which include, for example, a butyl-based rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, besides the above-described rubber components, it may or may not comprise a known thermoplastic elastomer.

(Rubber component synthesized from recycle-derived/biomass-derived raw material)

A monomer that is a structural unit of a synthetic rubber such as an IR, a BR, an SBR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1-3 butadiene. Examples of the aromatic vinyl compound include, but not particularly limited to, styrene and the like. Among them, a recycle-derived polyisoprene (recycled isoprene), a recycle-derived butadiene (recycled butadiene), and a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the reference standards that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

[Filler]

The rubber composition relating to the present embodiment preferably comprises a filler. The rubber composition preferably comprises carbon black or silica as a filler. Moreover, the filler may be a filler consisting of carbon black and silica.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component including a semiconductor, a tire, a desiccant, a filtering material including diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably 100 $m^2/g$ or more, more preferably 120 $m^2/g$ or more, further preferably 140 $m^2/g$ or more, further preferably 160 $m^2/g$ or more, particularly preferably 170 $m^2/g$ or more, from the viewpoint of securement of reinforcing property and grip performance. Moreover, it is preferably 350 $m^2/g$ or less, more preferably 300 $m^2/g$ or less, further preferably 250 $m^2/g$ or less, from the viewpoints of heat generation and processability. Besides, the $N_2SA$ of the silica is measured by the above-described measuring method.

An average primary particle size of silica is preferably 10 nm or more, more preferably 12 nm or more, further preferably 14 nm or more, particularly preferably 16 nm or more. Moreover, the average primary particle size is preferably 24 nm or less, more preferably 22 nm or less, further preferably 20 nm or less. Besides, the average primary particle size of silica is measured by the above-described measuring method.

A content of silica based on 100 parts by mass of the rubber component of the rubber composition constituting the tread part is preferably greater than 50 parts by mass, more preferably greater than 60 parts by mass, further preferably 80 parts by mass or more. Moreover, the content of silica based on 100 parts by mass of the rubber component is preferably less than 110 parts by mass, more preferably less than 100 parts by mass, further preferably less than 90 parts by mass, from the viewpoint of lowering heat generation. A content of silica in the rubber composition constituting the sidewall part is not particularly limited, and the rubber composition constituting the sidewall part may not comprise silica.

(Silane coupling agent)

The silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. These silane coupling agents may be used alone, or two or more thereof may be used in combination.

<Carbon black>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. These may be used alone, or two or more thereof may be used in combination.

Moreover, as carbon black other than the above-described carbon black, carbon black made from a biomass material such as lignin and the like, or a recovered carbon black refined by pyrolyzing a product comprising carbon black such as a tire and the like may be used from the viewpoints of a life cycle assessment, etc. The rubber composition constituting the sidewall part preferably comprise a recovered carbon black.

In the present specification, the term "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight lost content due to the oxidative combustion of the recovered carbon black is 87% by mass or less. The recovered carbon black may also be expressed by rCB.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LDC Co., Ltd., etc. can be used.

An average primary particle size of carbon black is preferably 15 nm or more, more preferably 18 nm or more, further preferably 20 nm or more, particularly preferably 22 nm or more. On the other hand, the average primary particle size is preferably 100 nm or less, more preferably 80 nm or less, further preferably 50 nm or less, from the viewpoint of obtaining reinforcing property. Besides, the average primary particle size of the carbon black is measured by the above-described measuring method.

A nitrogen adsorption specific surface area ($N_2SA$) of carbon black is preferably 200 $m^2$/g or less, more preferably 180 $m^2$/g or less, further preferably 150 $m^2$/g or less, from the viewpoint of the effects of the present invention. Moreover, the $N_2SA$ is preferably 30 $m^2$/g or more, more preferably 40 $m^2$/g or more, further preferably 45 $m^2$/g or more. Besides, the $N_2SA$ of the carbon black is measured by the above-described measuring method.

A content of carbon black when compounded in the rubber composition constituting the tread part based on 100 parts by mass of the rubber component is preferably greater than 3 parts by mass, more preferably greater than 5 parts by mass, further preferably greater than 9 parts by mass, from the viewpoint of the effects of the present invention. Moreover, it is preferably less than 50 parts by mass, more preferably less than 40 parts by mass, further preferably less than 30 parts by mass, particularly preferably less than 20 parts by mass, from the viewpoint of obtaining flexibility to mitigate stress.

A content of carbon black when compounded in the rubber composition constituting the sidewall part based on 100 parts by mass of the rubber component (a total amount of two or more types of carbon black when compounded in the rubber composition) is preferably greater than 20 parts by mass, more preferably greater than 25 parts by mass, further preferably greater than 30 parts by mass, further preferably greater than 40 parts by mass, particularly preferably greater than 45 parts by mass, from the viewpoint of the effects of the present invention. Moreover, it is preferably less than 140 parts by mass, more preferably less than 120 parts by mass, further preferably less than 100 parts by mass, particularly preferably less than 90 parts by mass, from the viewpoint of reinforcing property.

<Other fillers>

The filler may comprise another filler other than silica and carbon black. The other filler is not particularly limited, and as the other filler, those conventionally and commonly used in the tire industry can be compounded, such as, for example, aluminum hydroxide, calcium carbonate, alumina, clay, talc, and the like.

[Other compounding agents]

The rubber composition relating to the present embodiment can appropriately comprise compounding agents conventionally and commonly used in the tire industry, for example, a plasticizing agent, processing aid, a vulcanized rubber particle, wax, stearic acid, zinc oxide, an antioxidant, a vulcanizing agent, a vulcanization accelerator, and the like, in addition to the rubber component and the filler.

<Plasticizing agent>

The plasticizing agent is a material giving a rubber component plasticity and includes both a plasticizing agent that is in a liquid state at 25°C and a plasticizing agent that is solid at normal temperature (25°C). Examples of the plasticizing agent include a resin component, oil, a liquid rubber, an ester-based plasticizing agent, and the like. These plasticizing agents may be ones derived from mineral resources such as petroleum, natural gas, and the like, or ones derived from biomass. Moreover, low-molecular-weight hydrocarbon components obtained by pyrolyzing used tires or products containing various components and performing extraction from the pyrolysate may be used as plasticizing agents. These plasticizing agents may be used alone, or two or more thereof may be used in combination.

(Resin component)

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

«C9-based resin»

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

«C5-based resin»

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

<<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

«Indene-based resin»

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

«Phenol-based resin»

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

<<Softening point>>

A softening point of a resin component is preferably higher than 80°C, more preferably higher than 90°C, further preferably higher than 100°C, from the viewpoint of wet grip performance. Moreover, it is preferably lower than 150°C, more preferably lower than 140°C, further preferably lower than 130°C, from the viewpoints of processability and improvement in dispersibility of a filler in a rubber component. The softening point of the resin component is measured by the above-described measuring method.

<<Content>>

A content of resin based on 100 parts by mass of the rubber component of the rubber composition constituting the tread part is preferably greater than 5 parts by mass, more preferably greater than 10 parts by mass, further preferably 15 parts by mass or more. On the other hand, the content is preferably less than 40 parts by mass, more preferably less than 20 parts by mass, further preferably less than 18 parts by mass, from the viewpoint of suppression of heat generation. A content of resin in the rubber composition constituting the sidewall part is not particularly limited, and the rubber composition constituting the sidewall part may not comprise resin.

(Plasticizing agent other than resin component)

Oil, a liquid rubber, and an ester-based plasticizing agent which are plasticizing agents other than the resin component will be described.

(Oil)

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.
In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like.
In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at normal temperature (25°C).
The vegetable oil preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature (25°C).

Whether the rubber composition comprises the above-described acylglycerol can be confirmed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil when compounded in the rubber composition constituting the tread part based on 100 parts by mass of the rubber component is preferably 10 parts by mass or more, more preferably 12 parts by mass or more, further preferably 15 parts by mass or more, from the viewpoint of processability. Moreover, it is preferably 40 parts by mass or less, more preferably 35 parts by mass or less, further preferably 30 parts by mass or less, from the viewpoint of abrasion resistance. The content of the oil also includes an amount of oil contained in an oil-extended rubber.

A content of oil when compounded in the rubber composition constituting the sidewall part based on 100 parts by mass of the rubber component is preferably 1 part by mass or more, more preferably 5 parts by mass or more, further preferably 7 parts by mass or more, from the viewpoint of processability. Moreover, the content is preferably 30 parts by mass or less, more preferably 20 parts by mass or less, further preferably 10 parts by mass or less.

<<Liquid rubber>>

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

A content of a liquid rubber when compounded based on 100 parts by mass of the rubber component is preferably 1 part by mass or more, more preferably 3 parts by mass or more, further preferably 5 parts by mass or more. Moreover, the content of the liquid rubber is preferably 50 parts by mass or less, more preferably 30 parts by mass or less, further preferably 10 parts by mass or less. The content of the liquid rubber also includes an amount of an extending liquid rubber used for extending a rubber component.

<< Ester-based plasticizing agent >>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of an ester-based plasticizing agent when compounded based on 100 parts by mass of the rubber component is preferably 1 part by mass or more, more preferably 3 parts by mass or more, further preferably 5 parts by mass or more. Moreover, the content of the ester-based plasticizing agent is preferably 50 parts by mass or less, more preferably 30 parts by mass or less, further preferably 10 parts by mass or less. The content of the ester-based plasticizing agent also includes an amount of an extending ester-based plasticizing agent used for extending a rubber component.

(Vulcanized rubber particle)

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used.

A content of a vulcanized rubber particle when compounded based on 100 parts by mass of the rubber component can be appropriately adjusted, for example, within a range of greater than 1 part by mass and less than 80 parts by mass.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenolbased antioxidant such as 2,6-di-t-butyl-4-methylphenol, styrenated phenol, and the like; bisphenol-based, trisphenol-based, and polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Wax)

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, further preferably 5 parts by mass or less, from the viewpoints of abrasion resistance and breaking strength.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Zinc oxide)

A content of zinc oxide when compounded based on 100 parts by mass of the rubber component is preferably 0.5 parts by mass or more, more preferably 1.0 parts by mass or more, further preferably 1.5 part by mass or more, from the viewpoint of processability. Moreover, it is preferably 5.0 parts by mass or less, more preferably 4.5 parts by mass or less, further preferably 4.0 parts by mass or less, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent can be used alone, or two or more thereof can be used in combination.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of prevention of deterioration. Besides, a content of a vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane), and the like. As these vulcanizing agents other than sulfur, those commercially available from Taoka Chemical Co., Ltd., LANXESS, Flexsys, etc. can be used. The vulcanizing agents can be used alone, or two or more thereof can be used in combination.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehydeammonia-based, imidazoline-based, and xanthate-based vulcanization accelerators. Among them, the sulfenamide-based vulcanization accelerator, the thiazole-based vulcanization accelerator, and the guanidine-based vulcanization accelerator are preferable. The vulcanization accelerator may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

A content of a vulcanization accelerator when compounded based on 100 parts by mass of the rubber component is preferably 1 part by mass or more, more preferably 1.5 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Various materials comprising carbon atoms>

In the present specification, various materials each having a carbon atom (for example, a rubber, oil, a resin component, a vulcanization accelerator, an antioxidant, a surfactant, and the like) may be derived from carbon dioxide in the atmosphere. These various materials can be obtained by converting carbon dioxide directly or converting methane obtained via a process of methanation by which methane is synthesized from carbon dioxide.

[Production method]

The rubber composition can be produced by a known method. For example, it can be produced by kneading the above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

The tire relating to the present embodiment can be produced using the above-described rubber composition by a usual method. That is, the tire can be produced by extruding unvulcanized rubber compositions into a shape of a tread part or a sidewall part with an extruder equipped with a mouthpiece having a predetermined shape, attaching the extruded unvulcanized tread together with other tire members on a tire forming machine while making an adjustment so that it has a predetermined tire structure, to form an unvulcanized tire by a usual molding method, followed by heating and pressurizing this unvulcanized tire in a vulcanizing machine. Examples of the vulcanization condition include, but not particularly limited to, for example, a method of vulcanizing at 140°C to 170°C for 10 to 40 minutes.

[Application]

In the present specification, the tire can be used for any application, regardless of whether the tire is a pneumatic tire or a non-pneumatic tire and can be used as a tire for a passenger car, a tire for a large passenger car, a tire for a large SUV, a racing tire, a motorcycle tire, a heavy-duty tire, or a run-flat tire. Besides, the tire for a passenger car refers to a tire that is presupposed to be mounted to a vehicle running with four wheels and that has a maximum load capacity of less than 1400 kg. The heavy-duty tire refers to a tire having a maximum load capacity of 1400 kg or more. Moreover, in the present specification, the tire can be used as an all-season tire and a summer tire, as well as a winter tire such as a studless tire.

EXAMPLE

Hereinafter, examples considered to be preferable in implementing the present invention (Examples) will be described, though the scope of the present invention is not limited to only these Examples.

Results, which are calculated based on evaluation methods described below considering pneumatic tires each comprising a tread part and a sidewall part produced using rubber compositions obtained by changing compounding formulations in accordance with Table 1 using various chemicals described below, are shown in Tables 2 and 3.

NR: TSR20

BR: Ubepol BR (Registered Trademark) 150B manufactured by UBE Corporation (cis content: 97 mol%)

SBR1: HPR830E manufactured by JSR Corporation (S-SBR, styrene content: 39.5% by mass, vinyl content: 38.5 mol%, oil extended product comprising 10.0 parts by mass of oil content based on 100 parts by mass of rubber component)

SBR2: Hydrogenated SBR produced in Production example 1 described below (styrene content: 30.0% by mass, vinyl content: 33.0 mol%, a hydrogenation rate is 80 mol%)

CB1: DIABLACK I (N220) manufactured by Mitsubishi Chemical Corporation ($N_2SA$: 114 $m^2/g$, average primary particle size: 22 nm)

CB2: Seast SO manufactured by Tokai Carbon Co., Ltd., (FEF, N550, $N_2SA$: 42 $m^2/g$, average primary particle size: 43 nm)

rCB: Carbon black obtained by pulverizing and firing of waste tire (ash content: 17% by mass)

Silica: Ultrasil (Registered Trademark) VN3 manufactured by Evonik Industries AG ($N_2SA$: 175 $m^2/g$, average primary particle size: 18 nm)

Silane coupling agent: Si266 manufactured by Evonik Industries AG (bis(3-triethoxysilylpropyl)disulfide)

Resin: Oppera PR-395 manufactured by Exxon Mobil Chemical (DCPD-C9 resin, softening point: 117.8°C)

Oil: VivaTec 500 manufactured by H&R Group

Zinc oxide: Zinc oxide No. 1 manufactured by Mitsui Mining & Smelting Co., Ltd.

Stearic acid: Bead stearic acid "CAMELLIA" manufactured by NOF CORPORATION

Wax: OZOACE 0355 manufactured by Nippon Seiro Co., Ltd.

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac FR manufactured by Ouchi Shinko Chemical Industry Co., Ltd. (2,2,4-trimethyl-1,2-dihydroquinoline polymer)

Sulfur: Powdered sulfur manufactured by Karuizawa Sulfur Co, Ltd.

Vulcanization accelerator 1: Nocceler CZ manufactured by Ouchi Shinko Chemical Industry Co., Ltd. (N-cyclohexyl-2-benzothiazolylsulfenamide)

Vulcanization accelerator 2: Nocceler D manufactured by Ouchi Shinko Chemical Industry Co., Ltd. (N,N'-diphenylguanidine)

Production example 1: Production of hydrogenated SBR

To a heat-resistant reaction vessel sufficiently subjected to nitrogen purge, 2000 mL of n-hexane, 60 g of styrene, 140 g of 1,3-butadiene, 0.93 g of TMEDA, and 0.45 mmol of n-butyllithium are added, and the mixture is stirred at 50°C for 5 hours to perform a polymerization reaction. Next, the mixture is stirred for 20 minutes while supplying a hydrogen gas at a pressure of 0.4 MPa-Gauge and reacted with an unreacted polymer terminal lithium into lithium hydride. Hydrogenation is performed using a catalyst mainly composed of titanocenedichloride with a hydrogen gas-supplying pressure at 0.7 MPa-Gauge and a reaction temperature at 90°C. When hydrogen absorption reaches an integrated amount of an intended hydrogenation rate, the reaction temperature is set to a normal temperature and the hydrogen pressure is returned to a normal pressure to extract the hydrogen gas from the reaction vessel, and the reaction solution is charged and stirred in water to remove the solvent by steam stripping, thereby obtaining a hydrogenated SBR.

(Examples and Comparative examples)

According to the compounding formulations shown in Table 1, using a 1.7 L closed Banbury mixer, chemicals other than sulfur and vulcanization accelerators are kneaded for 1 to 10 minutes until a temperature reaches a discharge temperature at 150 to 160°C to obtain a kneaded product. Next, using a twin-screw open roll, the sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread part or a sidewall part with an extruder equipped with a mouthpiece having a predetermined shape, the tread part and sidewall part are attached together with other tire members to prepare an unvulcanized tire, and the obtained unvulcanized tire is press-vulcanized under a condition at 150°C for 35 minutes, thereby producing each test tire (205/55R16).

<Measurement of acetone extraction amount (AE amount)>

For each of test pieces cut out from a tread part and a sidewall part of each test tire, an AE amount is measured. The AE amount can be calculated by the following equation after immersing each test piece in acetone for 24 hours to extract a soluble component and measuring a mass of each test piece before and after extraction,

Acetone extraction amount (%) = {(mass of vulcanized rubber test piece before extraction - mass of vulcanized rubber test piece after extraction)/(mass of vulcanized rubber test piece before extraction)} × 100.

<Measurement of Shore hardness>

A sample for measurement of hardness is prepared by cutting out a rubber test piece from each of a tread part and a sidewall part of each test tire so that the tire radial direction becomes a thickness direction for the tread part and the tire width direction becomes a thickness direction for the sidewall part, and a rubber hardness is measured at 23°C according to JIS K 6253 while pressing a type-A durometer against the sample from the ground-contacting surface side.

<Measurements of 30°C tan δ and 30°CE∗>

A rubber rest piece having a length of 20 mm, a width of 4 mm, and a thickness of 1 mm is prepared by being cut out from each of a tread part and a sidewall part of each test tire so that a tire circumferential direction becomes a long side and a tire radial direction becomes a thickness direction for the tread part and so that a tangential direction relative to the circumference of the tire becomes a long side and a tire width direction becomes a thickness direction for the sidewall part. For each rubber test piece, a tan δ (30°C tan δ) and a complex elastic modulus (30°CE∗) are measured using EPLEXOR series manufactured by gabo Systemtechnik GmbH under a condition of a temperature at 30°C, a frequency of 10 Hz, an initial strain of 5%, a dynamic strain of $\pm 1.0\%$, and an extension mode.

<Durability after deterioration>

After each test tire is rim-assembled to a standardized rim and filled with air at a standardized internal pressure, each test tire is left to stand with no load for 24 hours in a control room at 40°C and an ozone concentration of 50 pphm and then exposed to ozone. Each test tire after exposure to ozone is made to run on a drum at 60 km/h using a drum testing machine under a condition of an internal pressure of 200 kPa and a load (standardized load), a running distance until damage is found in each test tire is measured and indicated as an index with a value of a control tire (Comparative example 5) being as 100. The results show that the higher the value of the index is, the more excellent the durability is.

<Fuel efficiency>

For each test tire, a rolling resistance coefficient (RCC) is measured in accordance with JIS D 4234:2009 (ISO28580), and a value of the reciprocal number of the rolling resistance coefficient is indicated as an index with the control tire (Comparative example 5) being as 100. The results show that the larger the index is, the smaller the rolling resistance is and the more excellent the fuel efficiency is.

(Fuel efficiency index) = (rolling resistance coefficient of reference --> Comparative example) / (rolling resistance coefficient of each test tire) $\times$ 100.

A sum of a durability index after deterioration and a fuel efficiency index is indicated as an overall performance index.

Table 1

| | Compounding number | | | | | | | | | | | | |
|---|---|---|---|---|---|---|---|---|---|---|---|---|---|
| | T1 | T2 | T3 | T4 | T5 | S1 | S2 | S3 | S4 | S5 | S6 | S7 | S8 |
| | Compounding amount (part by mass) | | | | | | | | | | | | |
| NR | - | 10 | - | - | - | 30 | 30 | 30 | 30 | 30 | 30 | 30 | 30 |
| BR | 20 | 30 | 20 | 20 | - | 10 | 10 | 40 | 10 | 10 | 10 | 10 | 10 |
| SBR1 | - | - | - | 88 | 44 | - | - | - | - | 66 | | 33 | - |
| (Rubber solid content) | - | - | - | (80) | (40) | - | - | - | - | (60) | | (30) | - |
| SBR2 | 80 | 60 | 80 | | 60 | 60 | 60 | 30 | 60 | | 60 | 30 | 60 |
| CB1 | 10 | 10 | 10 | 10 | 10 | - | - | - | - | - | - | - | - |
| CB2 | - | - | - | - | - | 50 | 30 | 50 | 40 | 50 | | 50 | 30 |
| rCB | - | - | - | - | - | - | 20 | - | - | - | 50 | - | 20 |
| Silica | 80 | 80 | 60 | 80 | 80 | - | - | - | - | - | - | - | - |
| Silane coupling agent | 8.0 | 8.0 | 6.0 | 8.0 | 8.0 | - | - | - | - | - | - | - | - |
| Resin | 15 | 15 | 15 | 15 | 15 | - | - | - | - | - | - | - | - |
| Oil | 20 | 20 | 20 | 12 | 16 | 7 | 7 | 7 | 7 | 1 | 7 | 4 | 15 |
| Zinc oxide | 2.5 | 2.5 | 2.5 | 2.5 | 2.5 | 2.0 | 2.0 | 2.0 | 2.0 | 2.0 | 2.0 | 2.0 | 2.0 |
| Stearic acid | 2.1 | 2.1 | 2.1 | 2.1 | 2.1 | 2.0 | 2.0 | 2.0 | 2.0 | 2.0 | 2.0 | 2.0 | 2.0 |
| Wax | - | - | - | - | - | 1.0 | 1.0 | 1.0 | 1.0 | 1.0 | 1.0 | 1.0 | 1.0 |
| Antioxidant 1 | - | - | - | - | - | 2.0 | 2.0 | 2.0 | 2.0 | 2.0 | 2.0 | 2.0 | 2.0 |
| Antioxidant 2 | - | - | - | - | - | 1.0 | 1.0 | 1.0 | 1.0 | 1.0 | 1.0 | 1.0 | 1.0 |
| Sulfur | 1.4 | 1.4 | 1.4 | 1.4 | 1.4 | 1.8 | 1.8 | 1.8 | 1.8 | 1.8 | 1.8 | 1.8 | 1.8 |
| Vulcanization accelerator 1 | 2.2 | 2.2 | 2.2 | 2.2 | 2.2 | 1.0 | 1.0 | 1.0 | 1.0 | 1.0 | 1.0 | 1.0 | 1.0 |
| Vulcanization accelerator 2 | 2.5 | 2.5 | 2.5 | 2.5 | 2.5 | - | - | - | - | - | - | - | - |

(continued)

| | \multicolumn{13}{c|}{Compounding number} |
|---|---|---|---|---|---|---|---|---|---|---|---|---|---|
| | T1 | T2 | T3 | T4 | T5 | S1 | S2 | S3 | S4 | S5 | S6 | S7 | S8 |
| Total styrene amount (% by mass) | 24.0 | 18.0 | 24.0 | 25.5 | 30.8 | 18.0 | 18.0 | 9.0 | 18.0 | 19.1 | 18.0 | 18.7 | 18.0 |
| AE amount (% by mass) | 17.2 | 17.2 | 18.7 | 17.2 | 17.2 | 8.7 | 8.7 | 8.7 | 9.2 | 8.7 | 8.7 | 8.7 | 12.8 |
| Rubber hardness Hs | 68.2 | 67.5 | 62.6 | 63.4 | 68.0 | 58.6 | 55.9 | 57.8 | 56.9 | 55.1 | 53.7 | 58.3 | 53.6 |
| 30°C tan $\delta$ | 0.25 | 0.25 | 0.22 | 0.25 | 0.26 | 0.16 | 0.17 | 0.15 | 0.12 | 0.18 | 0.17 | 0.16 | 0.18 |
| 30°CE* (MPa) | 4.69 | 4.87 | 3.26 | 3.91 | 4.62 | 2.57 | 2.20 | 2.55 | 1.97 | 2.25 | 2.57 | 2.25 | 2.40 |

Table 2

| | \multicolumn{10}{c|}{Example} |
|---|---|---|---|---|---|---|---|---|---|---|
| | 1 | 2 | 3 | 4 | 5 | 6 | 7 | 8 | 9 | 10 |
| Compounding for tread part | T1 | T1 | T2 | T3 | T3 | T5 | T1 | T1 | T2 | T1 |
| Compounding for sidewall part | S1 | S2 | S3 | S4 | S2 | S7 | S8 | S6 | S6 | S1 |
| St1 (% by mass) | 24.0 | 24.0 | 18.0 | 24.0 | 24.0 | 30.8 | 24.0 | 24.0 | 18.0 | 24.0 |
| St2 (% by mass) | 18.0 | 18.0 | 9.0 | 18.0 | 18.0 | 18.6 | 18.0 | 18.0 | 18.0 | 18.0 |
| St1 +St2 (% by mass) | 42.0 | 42.0 | 27.0 | 42.0 | 42.0 | 49.4 | 42.0 | 42.0 | 36.0 | 42.0 |
| Thickness T (mm) | 3.5 | 4.0 | 4.0 | 3.5 | 4.0 | 3.5 | 3.5 | 4.0 | 4.0 | 3.5 |
| Land ratio L | 0.83 | 0.83 | 0.83 | 0.88 | 0.83 | 0.65 | 0.83 | 0.83 | 0.88 | 0.83 |
| (St1 +St2)$\times$T$\times$L/100 | 1.22 | 1.39 | 0.90 | 1.29 | 1.39 | 1.12 | 1.22 | 1.39 | 1.27 | 1.22 |
| AE1 (% by mass) | 17.2 | 17.2 | 17.2 | 18.7 | 18.7 | 17.2 | 17.2 | 17.2 | 17.2 | 17.2 |
| AE2 (% by mass) | 8.7 | 8.7 | 8.7 | 9.2 | 8.7 | 8.7 | 12.8 | 8.7 | 8.7 | 8.7 |
| AE1-AE2 | 8.5 | 8.5 | 8.5 | 9.5 | 10.0 | 8.5 | 4.4 | 8.5 | 8.5 | 8.5 |
| AE1$\times$L | 14.28 | 14.28 | 14.28 | 16.46 | 15.52 | 11.18 | 14.28 | 14.28 | 15.14 | 14.28 |
| AE2/T | 2.49 | 2.18 | 2.18 | 2.63 | 2.18 | 2.49 | 3.66 | 2.18 | 2.18 | 2.49 |
| Hs1 | 68.2 | 68.2 | 67.5 | 62.6 | 62.6 | 68.0 | 68.2 | 68.2 | 67.5 | 68.2 |
| Hs2 | 58.6 | 55.9 | 57.8 | 56.9 | 55.9 | 58.3 | 53.6 | 53.7 | 53.7 | 58.6 |
| Hs1-Hs2 | 9.6 | 12.3 | 9.7 | 5.7 | 6.7 | 9.7 | 14.6 | 14.5 | 13.8 | 9.6 |
| Groove depth H of deepest part in circumferential direction (mm) | 6.5 | 6.5 | 6.5 | 6.5 | 6.5 | 6.5 | 6.5 | 6.5 | 6.5 | 7.5 |
| 30°C tan $\delta_T$ | 0.25 | 0.25 | 0.25 | 0.22 | 0.22 | 0.26 | 0.25 | 0.25 | 0.25 | 0.25 |
| 30°CE*s (MPa) | 2.57 | 2.20 | 2.55 | 1.97 | 2.20 | 2.25 | 2.40 | 2.57 | 2.57 | 2.57 |
| T/30°CE*s | 1.36 | 1.82 | 1.57 | 1.78 | 1.82 | 1.56 | 1.46 | 1.56 | 1.56 | 1.36 |
| 30°C tan $\delta_T$/H | 0.038 | 0.038 | 0.038 | 0.034 | 0.034 | 0.040 | 0.038 | 0.038 | 0.038 | 0.033 |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Durability after deterioration | 122 | 116 | 106 | 119 | 114 | 102 | 119 | 116 | 113 | 121 |
| Fuel efficiency | 109 | 98 | 105 | 130 | 103 | 103 | 99 | 94 | 96 | 110 |
| Overall performance | 230 | 214 | 211 | 248 | 217 | 205 | 218 | 210 | 209 | 231 |

Table 3

| | Comparative example | | | | | |
|---|---|---|---|---|---|---|
| | 1 | 2 | 3 | 4 | 5 | 6 |
| Compounding for tread part | T4 | T4 | T1 | T4 | T5 | T5 |
| Compounding for sidewall part | S5 | S1 | S5 | S6 | S7 | S7 |
| St1 (% by mass) | 25.5 | 25.5 | 24.0 | 25.5 | 30.8 | 30.8 |
| St2 (% by mass) | 19.1 | 18.0 | 19.0 | 18.0 | 18.6 | 18.6 |
| St1 +St2 (% by mass) | 44.7 | 43.5 | 43.1 | 43.5 | 49.4 | 49.4 |
| Thickness T (mm) | 4.0 | 3.5 | 4.0 | 4.0 | 3.5 | 3.5 |
| Land ratio L | 0.88 | 0.88 | 0.83 | 0.88 | 0.83 | 0.59 |
| (St1 +St2)$\times$T$\times$L/100 | 1.57 | 1.34 | 1.43 | 1.53 | 1.43 | 1.02 |
| AE1 (% by mass) | 17.2 | 17.2 | 17.2 | 17.2 | 17.2 | 17.2 |
| AE2 (% by mass) | 8.7 | 8.7 | 8.7 | 8.7 | 8.7 | 8.7 |
| AE1-AE2 | 8.5 | 8.5 | 8.5 | 8.5 | 8.5 | 8.5 |
| AE1$\times$L | 15.14 | 15.14 | 14.28 | 15.14 | 14.28 | 10.15 |
| AE2/T | 2.18 | 2.49 | 2.18 | 2.18 | 2.49 | 2.49 |
| Hs1 | 63.4 | 63.4 | 68.2 | 63.4 | 68.0 | 68.0 |
| Hs2 | 55.1 | 58.6 | 55.1 | 53.7 | 58.3 | 58.3 |
| Hs1-Hs2 | 8.3 | 4.8 | 13.1 | 9.7 | 9.7 | 9.7 |
| Groove depth H of deepest part in circumferential direction (mm) | 6.5 | 6.5 | 6.5 | 6.5 | 6.5 | 6.5 |
| 30°C tan $\delta_T$ | 0.25 | 0.25 | 0.25 | 0.25 | 0.26 | 0.26 |
| 30°CE$_*$s (MPa) | 2.25 | 2.57 | 2.25 | 2.57 | 2.25 | 2.25 |
| T/30°CE$_*$s | 1.78 | 1.36 | 1.78 | 1.56 | 1.56 | 1.56 |
| 30°C tan $\delta_T$/H | 0.038 | 0.038 | 0.038 | 0.038 | 0.040 | 0.040 |
| Durability after deterioration | 63 | 93 | 95 | 81 | 100 | 101 |
| Fuel efficiency | 95 | 105 | 94 | 93 | 100 | 89 |
| Overall performance | 158 | 197 | 189 | 174 | 200 | 190 |

<Embodiments>

Examples of embodiments of the present invention are described below.

[1] A tire comprising a tread part and a sidewall part,

wherein the tread part and the sidewall part are each composed of a rubber composition comprising a rubber component comprising a hydrogenated styrene-butadiene rubber, and
wherein L is 0.60 or more and 0.90 or less, and
(St1+St2)×T×L / 100 is 1.4 or less,
where St1 represents a total styrene amount, in % by mass, of a rubber component constituting the tread part, St2 represents a total styrene amount, in % by mass, of a rubber component constituting the sidewall part, L represents a land ratio, and T represents a thickness, in mm, of a rubber layer constituting the sidewall part.

[2] The tire of [1] above, wherein the rubber composition constituting the sidewall part comprises a recovered carbon black.

[3] The tire of [1] or [2] above, wherein St1+St2 is 25.0 or more, preferably 28.0 or more, more preferably 30.0 or more.

[4] The tire of any one of [1] to [3] above, wherein AE1 - AE2 is 8.5 or less, where AE1 represents an acetone extraction amount, in % by mass, of the rubber composition constituting the tread part, and AE2 represents an acetone extraction amount, in % by mass, of the rubber composition constituting the sidewall part.

[5] The tire of any one of [1] to [4] above, wherein AE1 ×L is 15.00 or more, where AE1 represents an acetone extraction amount, in % by mass, of the rubber composition constituting the tread part.

[6] The tire of any one of [1] to [5] above, wherein AE2/T is 0.12 or more, preferably 0.15 or more, more preferably 0.20 or more, where AE2 represents an acetone extraction amount, in % by mass, of the rubber composition constituting the sidewall part.

[7] The tire of any one of [1] to [6] above, wherein Hs1 - Hs2 is 10.0 or less, where Hs1 represents a Shore hardness of the rubber composition constituting the tread part, and Hs2 represents a Shore hardness of the rubber composition constituting the sidewall part.

[8] The tire of any one of [1] to [7] above, wherein T/30°CE∗s is 1.60 or less, where 30°CE∗s represents a complex elastic modulus at 30°C, in MPa, of the rubber composition constituting the sidewall part.

[9] The tire of any one of [1] to [8] above, wherein the tread part comprises one or more circumferential grooves extending continuously in a tire circumferential direction, and wherein 30°C tan $\delta_T$ / H is 0.025 or more, preferably 0.030 or more, more preferably 0.035 or more, where H represents a groove depth, in mm, of a deepest part of the one or more circumferential grooves, and 30°C tan $\delta_T$ represents a tan $\delta$ at 30°C of the rubber composition constituting the tread part.

[10] The tire of any one of [1] to [9] above, wherein an aspect ratio is 50% or more, preferably 55% or more, more preferably 60% or more.

[11] The tire of any one of [1] to [10] above, wherein the tread part comprises one or more circumferential grooves extending continuously in a tire circumferential direction, wherein a groove wall of at least one circumferential groove has a recessed part that is recessed outward in a groove width direction from a groove edge appearing on a grounding surface of the tread part, and wherein a total recessed amount of the at least one circumferential groove is 0.10 to 0.90 times as large as that of the groove width of the at least one circumferential groove.

[12] The tire of [11] above, wherein a first groove wall that is one of groove walls of the circumferential groove has a first recessed part that is recessed outward in the groove width direction from the groove edge appearing on the grounding surface of the tread part, and wherein a recessed amount of the first recessed part from the groove edge is gradually decreased toward both sides of the tire circumferential direction from a deepest part that is recessed most outward in the groove width direction.

[13] The tire of [12] above, wherein the first groove wall further has a second recessed part that is recessed outward in the groove width direction from the groove edge appearing on the grounding surface of the tread part where the recessed amount from the groove edge is constant in the tire circumferential direction.

[14] The tire of any one of [1] to [13] above, wherein the rubber composition constituting the tread part comprises 80 parts by mass or more of silica based on 100 parts by mass of the rubber component.

[15] The tire of any one of [1] to [14] above, wherein (St1 +St2)×T×L 100 is 1.3 or less, preferably 1.2 or less.

REFERENCE SIGNS LIST

1 Tread part
2 Cap rubber layer
3 Circumferential groove
4 Base rubber layer
5 Tread surface
CL Tire equator
T Thickness of rubber layer constituting sidewall part

PW Position at which distance between sidewalls on both sides becomes longest
6 Groove edge
7 Contour
8 Plane
9 Recessed part
11 Layer whose outer surface constitutes tread surface (cap rubber layer)
12 Layer adjacent to layer whose outer surface constitutes tread surface
15 Circumferential groove
16 Tread surface
17 Straight line connecting ends of circumferential grooves
18 Extension line of outer surface of layer adjacent to layer whose outer surface constitutes tread surface
19 Extension line of lowest part in tire radial direction (extension line of lowest part of circumferential groove)
20 Land part
P Middle point of land part in tire width direction
N Normal line relative to ground-contacting surface of tread on tire equator
H Groove depth of deepest part of circumferential groove
31 Bead core
32 Sidewall part
33 Bead part
34 Carcass
35 Belt layer
36 Belt reinforcement layer
37 Inner liner
38 Rim
39 Clinch
41 First groove wall
42 First recessed part
43 Deepest part
44 Recessed surface part
45 Convex surface part
46 Second recessed part
W1 Opening width (groove width on tread surface)
c1 Recessed amount from groove edge at groove bottom
c2 Recessed amount from groove edge at groove bottom
d1 Recessed amount from groove edge at groove bottom
d2 Recessed amount from groove edge at groove bottom
61 Edge band
62 Full band

**Claims**

1. A tire comprising a tread part and a sidewall part,

   wherein the tread part and the sidewall part are each composed of a rubber composition comprising a rubber component comprising a hydrogenated styrene-butadiene rubber, and
   wherein L is 0.60 or more and 0.90 or less, and
   $(St1+St2) \times T \times L / 100$ is 1.4 or less,
   where St1 represents a total styrene amount, in % by mass, of a rubber component constituting the tread part, St2 represents a total styrene amount, in % by mass, of a rubber component constituting the sidewall part, L represents a land ratio, and T represents a thickness, in mm, of a rubber layer constituting the sidewall part.

2. The tire of claim 1, wherein the rubber composition constituting the sidewall part comprises a recovered carbon black.

3. The tire of claim 1 or 2, wherein St1+St2 is 25.0 or more.

4. The tire of any one of claims 1 to 3,

wherein AE1 - AE2 is 8.5 or less,
where AE1 represents an acetone extraction amount, in % by mass, of the rubber composition constituting the tread part, and AE2 represents an acetone extraction amount, in % by mass, of the rubber composition constituting the sidewall part.

5. The tire of any one of claims 1 to 4,

wherein AE1 $\times$ L is 15.00 or more,
where AE1 represents an acetone extraction amount, in % by mass, of the rubber composition constituting the tread part.

6. The tire of any one of claims 1 to 5,

wherein AE2/T is 0.12 or more,
where AE2 represents an acetone extraction amount, in % by mass, of the rubber composition constituting the sidewall part.

7. The tire of any one of claims 1 to 6,

wherein Hs1 - Hs2 is 10.0 or less,
where Hs1 represents a Shore hardness of the rubber composition constituting the tread part, and Hs2 represents a Shore hardness of the rubber composition constituting the sidewall part.

8. The tire of any one of claims 1 to 7,

wherein $T/30°CE_*s$ is 1.60 or less,
where $30°CE_*s$ represents a complex elastic modulus at 30°C, in MPa, of the rubber composition constituting the sidewall part.

9. The tire of any one of claims 1 to 8,

wherein the tread part comprises one or more circumferential grooves extending continuously in a tire circumferential direction, and
wherein $30°C \tan \delta_T$ / H is 0.025 or more,
where H represents a groove depth, in mm, of a deepest part of the one or more circumferential grooves, and $30°C \tan \delta_T$ represents a $\tan \delta$ at 30°C of the rubber composition constituting the tread part.

10. The tire of any one of claims 1 to 9, wherein an aspect ratio is 50% or more.

11. The tire of any one of claims 1 to 10,

wherein the tread part comprises one or more circumferential grooves extending continuously in a tire circumferential direction,
wherein a groove wall of at least one circumferential groove has a recessed part that is recessed outward in a groove width direction from a groove edge appearing on a grounding surface of the tread part, and
wherein a total recessed amount of the at least one circumferential groove is 0.10 to 0.90 times as large as that of the groove width of the at least one circumferential groove.

12. The tire of claim 11,

wherein a first groove wall that is one of groove walls of the circumferential groove has a first recessed part that is recessed outward in the groove width direction from the groove edge appearing on the grounding surface of the tread part, and
wherein a recessed amount of the first recessed part from the groove edge is gradually decreased toward both sides of the tire circumferential direction from a deepest part that is recessed most outward in the groove width direction.

13. The tire of claim 12, wherein the first groove wall further has a second recessed part that is recessed outward in the groove width direction from the groove edge appearing on the grounding surface of the tread part where the recessed amount from the groove edge is constant in the tire circumferential direction.

14. The tire of any one of claims 1 to 13, wherein the rubber composition constituting the tread part comprises 80 parts by mass or more of silica based on 100 parts by mass of the rubber component.

15. The tire of any one of claims 1 to 14, wherein $(St1 + St2) \times T \times L / 100$ is 1.3 or less.

# FIG. 1

# FIG. 2

# FIG. 3

# FIG.4

# FIG.5

# FIG.6

# FIG.7

Europäisches
Patentamt
European
Patent Office
Office européen
des brevets

# EUROPEAN SEARCH REPORT

**Application Number**

EP 25 15 1929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 825 146 A1 (GOODYEAR TIRE & RUBBER [US]) 26 May 2021 (2021-05-26) * paragraph [0051]; claims 1-14; tables 1-3 * | 1-15 | INV. B60C1/00 B60C11/00 B60C11/03 |
| A | EP 3 326 838 A1 (SUMITOMO RUBBER IND [JP]) 30 May 2018 (2018-05-30) * claims 1-13; tables 1,2 * | 1-15 | B60C11/13 B60C13/00 C08K3/04 C08L9/06 |
| A | EP 4 008 566 A1 (SUMITOMO RUBBER IND [JP]) 8 June 2022 (2022-06-08) * paragraphs [0145] - [0151]; claims 1-14; tables 1-3 * | 1-15 | |

**TECHNICAL FIELDS SEARCHED (IPC)**

B60C
C08K
C09J
C08L

The present search report has been drawn up for all claims

| Place of search | Date of completion of the search | Examiner |
|---|---|---|
| Munich | 15 May 2025 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1929

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | | Publication date | Patent family member(s) | | Publication date |
|---|---|---|---|---|---|
| EP 3825146 | A1 | 26-05-2021 | BR | 102020022754 A2 | 18-05-2021 |
| | | | CN | 112778595 A | 11-05-2021 |
| | | | EP | 3825146 A1 | 26-05-2021 |
| | | | JP | 7645627 B2 | 14-03-2025 |
| | | | JP | 2021075711 A | 20-05-2021 |
| | | | US | 2021139678 A1 | 13-05-2021 |
| EP 3326838 | A1 | 30-05-2018 | CN | 108084532 A | 29-05-2018 |
| | | | EP | 3326838 A1 | 30-05-2018 |
| | | | JP | 6862787 B2 | 21-04-2021 |
| | | | JP | 2018083884 A | 31-05-2018 |
| | | | US | 2018142089 A1 | 24-05-2018 |
| EP 4008566 | A1 | 08-06-2022 | EP | 4008566 A1 | 08-06-2022 |
| | | | JP | 7650446 B2 | 25-03-2025 |
| | | | JP | 2022089491 A | 16-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005067236 A
- JP 2009002594 A
- EP 3427975 A

- JP 6856781 B
- EP 3173251 A

### Non-patent literature cited in the description

- JATMA YEAR BOOK. JATMA (The Japan Automobile Tyre Manufacturers Association, Inc.
- Measuring Rim. STANDARDS MANUAL. ETRTO (The European Tyre and Rim Technical Organisation
- Design Rim. YEAR BOOK. TRA (The Tire and Rim Association, Inc.

- *Akita Prefectural University Web Journal B*, 2019, vol. 6, 216-222
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193